# EUROPÄISCHE PATENTANMELDUNG

(11) **EP 3 524 857 A1**
(43) Veröffentlichungstag der Anmeldung: **14.08.2019**
(21) Anmeldenummer: 19155187.8
(22) Anmeldetag: 04.02.2019
(51) Int. Cl.: F16H 61/00

(54) **GETRIEBESYSTEM SOWIE EIN VERFAHREN ZUM BETRIEB EINES GETRIEBESYSTEMS**

(30) Priorität: 13.02.2018 DE 102018202214
(71) Anmelder: Magna PT B.V. & Co. KG, 74199 Untergruppenbach (DE)
(72) Erfinder: RÜHLE, Günter, 74369 Löchgau (DE); WOLF, Walter, 71672 Marbach (DE); ROTHVOSS, Stefan, 74211 Leingarten (DE)
(74) Vertreter: Rausch, Gabriele

(57) **Zusammenfassung**

Getriebesystem (1) in einem Fahrzeug mit einer Anbindung an einen Verbrennungsmotor sowie mindestens einer elektrischen Maschine (2) und einem hydraulischen Betätigungssystem mit mindestens einer Pumpe (3), wobei die Pumpe (3) mit der elektrischen Maschine (2) über einen elektrischen Antrieb und/oder einer Getriebekomponente über einen mechanischen Antrieb und über Freilaufmechanismen verbunden ist, wobei der elektrische Antrieb und der mechanische Antrieb der Pumpe (2) auf derselben Seite der Pumpe, der Antriebsseite (30) erfolgt.

## Beschreibung

Die Erfindung bezieht sich auf ein Getriebesystem mit einem dualen Pumpenantrieb für ein hydraulisches Betätigungssystem beispielsweise für eine automatisierte Kupplung oder ein automatisiertes Getriebe eines Fahrzeugs.
Die Erfindung betrifft weiterhin ein Verfahren zum Betrieb eines solchen Getriebesystems.

### Stand der Technik

Aus dem Stand der Technik sind Getriebesysteme wie aus der EP2921743 A1 bekannt, die hydraulische Betätigungsvorrichtungen mit mindestens einer Pumpe enthalten, um Aktuatoren für den Gangwechsel zu betätigen.
Solche Getriebe werden auch zunehmend für Hybridfahrzeuge oder nachträglich hybridisierte Fahrzeuge verwendet, wobei es gerade bei einer Ausbaustufe zum Hybridantrieb sinnvoll ist, bestehende Komponenten, wie eine Pumpe für das Hydrauliksystem, die bereits im Getriebe eingebunden ist, als Setzteil zu verwenden.

Wie in der DE19923154 B4 beschrieben, gehört zu einem hydraulischen Betätigungssystem für ein Automatikgetriebesystem eines Kraftfahrzeugs ein Pumpmittel, das kraftübertragend mit einem Motor oder dem Getriebesystem eines Fahrzeugs über einen mechanischen Antrieb einschließlich Freilaufmechanismus sowie kraftübertragend mit einem Elektromotor verbunden ist. Beide Antriebe sind mit der Pumpenwelle über Freiläufe gekoppelt, wobei jeder Antrieb jeweils an einem anderen Ende der Pumpenwelle angekoppelt wird.

Das in der DE 199 23 154 B4 beschriebene System braucht auf beiden Seiten der Pumpe Bauraum für den jeweiligen Antrieb der Pumpe durch den Verbrennungsmotor oder den Elektromotor.

Ausgehend von bestehenden konstruktiven Lösungen für Getriebesysteme mit Hydraulikpumpen für die hydraulische Versorgung von Aktuatoren und einer Schmierölversorgung bieten das Getriebesystem in der Regel keine solchen Bauraumverhältnisse. Es steht im Allgemeinen nur der Bauraum für einen verbrennungsmotorischen Antrieb, beispielsweise über einen Kettentrieb oder Zahnradtrieb zur Verfügung. Dieser liegt auf einer Seite, der Antriebsseite der Pumpe.

Soll nun die Pumpe im Getriebesystem aus Wirkungsgradgründen oder funktionalen Gründen wahlweise zum Antrieb durch den Verbrennungsmotor auch noch mit einem elektrischen Antrieb ausgerüstet werden, so ist es Aufgabe der Erfindung auf der Antriebsseite der Pumpe eine weitere Vorrichtung zur Anbindung der elektrischen Maschine herzustellen.

### Beschreibung der Erfindung

Die Aufgabe wird gelöst mit einem Getriebesystem in einem Fahrzeugs mit einer Anbindung an einen Verbrennungsmotor sowie mindestens einer elektrischen Maschine und einem hydraulischen Betätigungssystem mit mindestens einer Pumpe, wobei die Pumpe mit der elektrischen Maschine über einen elektrischen Antrieb und/oder einer Getriebekomponente über einen mechanischen Antrieb und über Freilaufmechanismen verbunden ist, dadurch gekennzeichnet, dass der elektrische Antrieb und der mechanische Antrieb der Pumpe auf derselben Seite der Pumpe, der Antriebsseite erfolgt.

Dieser Einrichtung macht pumpenseitig keine weitere Schnittstelle erforderlich, sondern erlaubt es, dass die Pumpe als Komponente unverändert bleibt.
Die bestehende Hydraulikpumpe selbst kann unverändert übernommen werden.

Für eine Hybridfunktionalität, in der der Verbrennungsmotor steht und das Fahrzeug elektrisch angetrieben wird, ist somit für die Hydraulik- und Schmierölversorgung keine zweite Hydraulikpumpe, die rein elektrisch angetrieben wird, im Hydrauliksystem erforderlich.

In einer vorteilhaften Ausführungsform ist die Antriebsseite der Pumpe mit einem Antriebsradsatz antriebswirksam verbunden, wobei der Antriebsradsatz ein Abtriebselement und einen Stirntrieb umfasst.

Vorteilhafterweise ist der Stirntrieb an eine Motorwelle der elektrischen Maschine mit einem Ritzel und einem Hohlrad mit Innenverzahnung ankoppelt. Durch diese Ausgestaltung wird Bauraum eingespart.

In einer vorteilhaften Ausgestaltung greift das Hohlrad über einen Hohlradträger im Abtriebselement an einer Pumpenwelle an.

Es ist von Vorteil, dass im Abtriebselement zwischen Hohlradträger und Antriebsnabe ein Freilauf angeordnet ist, sowie dass im Abtriebselement zwischen einem Kettenrad oder Stirnrad und der Antriebsnabe ein weiterer Freilauf angeordnet ist.

Die Aufgabe wird weiterhin gelöst mit einem Verfahren zum Betrieb eines Getriebesystems, wobei bei elektrischem Fahren die Getriebefunktionen ohne laufenden Verbrennungsmotor aufrecht gehalten werden.

Das Verfahren zum Betrieb eines Getriebesystems erlaubt, dass das Hubvolumen der Pumpe reduziert wird und bei niedrigen Verbrennungsmotordrehzahlen der Antrieb über den elektrischen Motor erfolgt, der mit höherer Drehzahl angetrieben wird.

Es ist auch von Vorteil, dass beide Antriebe parallel betrieben werden wobei nur die höhere Drehzahl an einem der Antriebe die Pumpe wirksam antreibt.

### Beschreibung der Figuren

Die Erfindung wird beispielhaft anhand der Figuren im Nachfolgenden erläutert.
- Fig. 1: eine schematische Darstellung der Erfindung,

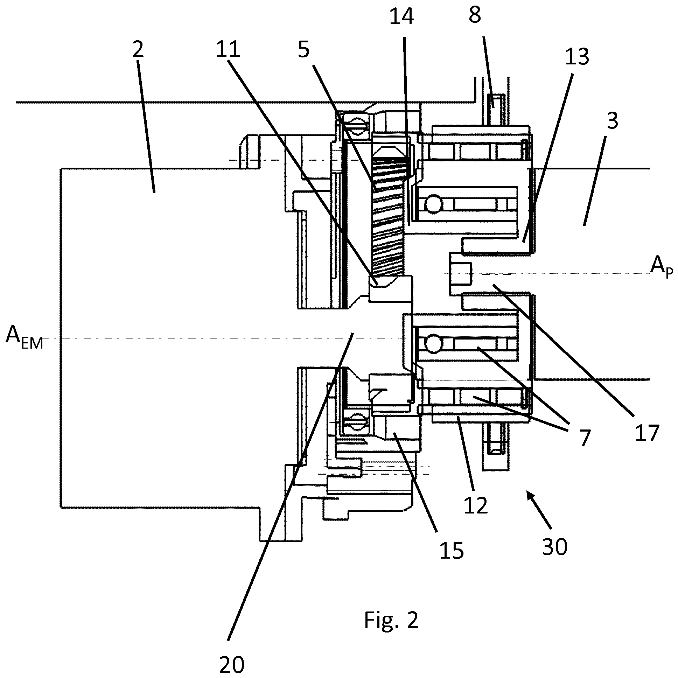

- Fig. 2: zeigt einen Schnitt entlang der Achse der elektrischen Maschine durch das erfindungsgemäße Getriebesystem,

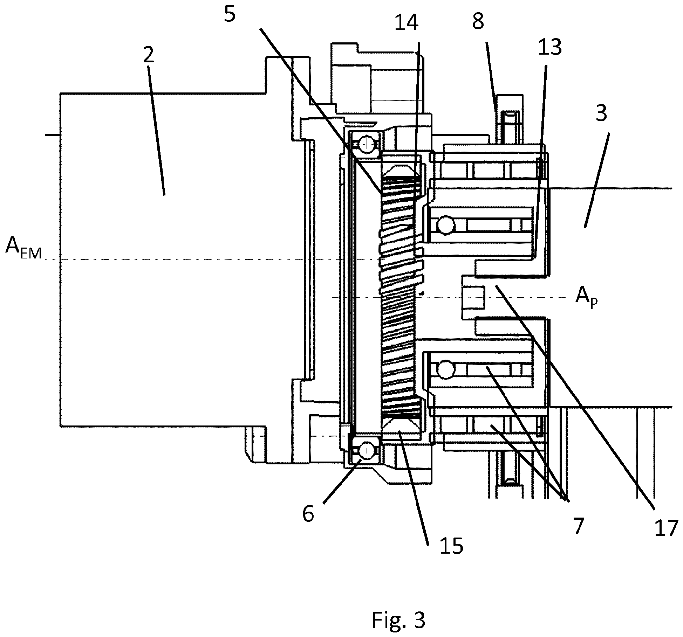

- Fig. 3: zeigt einen Schnitt entlang der Pumpenachse,
- Fig. 4: zeigt eine Ansicht mit Schnitt durch den Kettentrieb,
- Fig. 5: zeigt eine Ansicht im Schnitt durch den Stirntrieb,
- Fig. 6: eine Gesamtansicht.

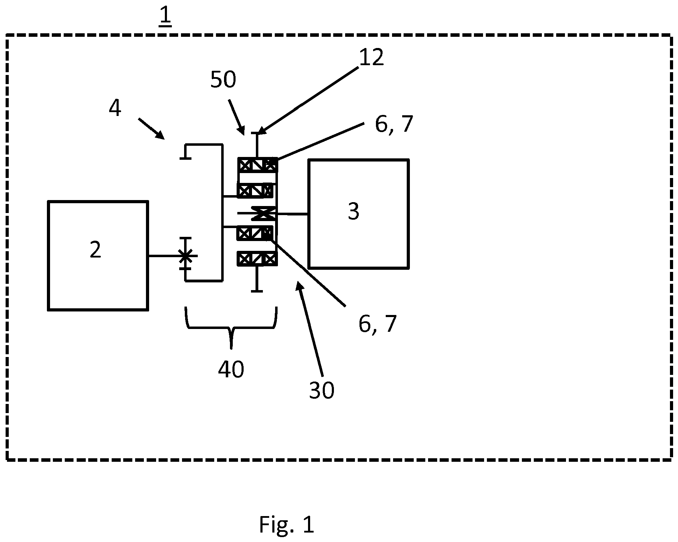

In Figur 1 ist schematisch ein Getriebesystem 1 dargestellt, das neben Getriebekomponenten, seien es Kupplungen, Getrieberadsätzen, Aktuatoren etc., auch eine Pumpe 3 enthält.

Die Details werden in den weiteren Figuren dargestellt.

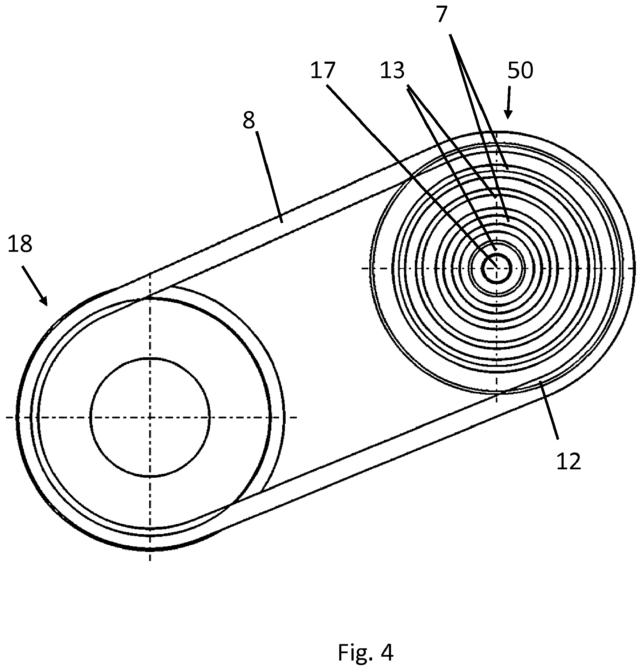

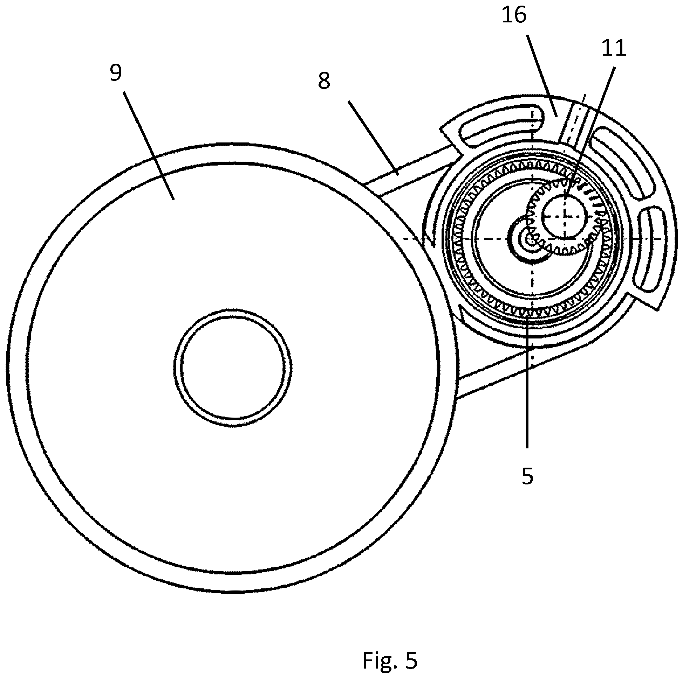

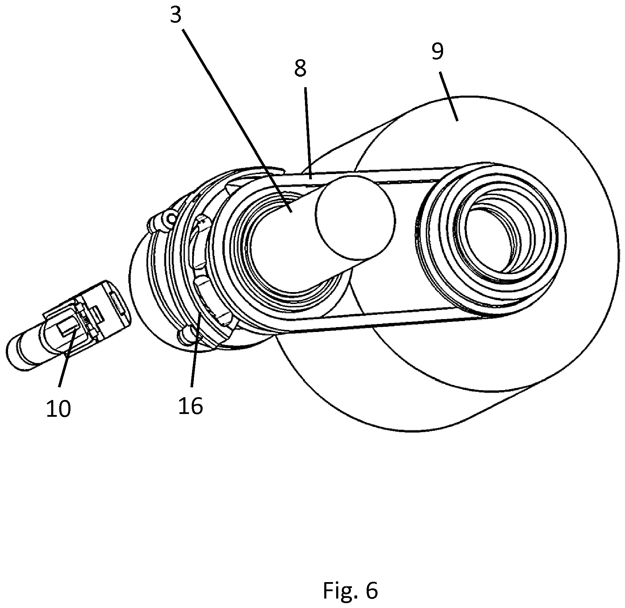

Die Einbauposition der Pumpe 3 ist aus dem Basisgetriebe vorgegeben. Beispielsweise ist aus den Figuren 4, 5 und 6 zu erkennen, dass die Pumpe 3 in einer parallelen Achsanordnung zu einer Getriebekomponenten, beispielsweise einer Kupplung 9 angeordnet ist. Der Antrieb erfolgt im Basisgetriebe mit einem Kettentrieb 8, der an der Pumpe 3 ein Kettenrad 12 antreibt.

Die Schnittstelle zum Antrieb der Pumpe ist mit der Antriebsseite 30 vorgegeben und wird von dem elektrischen Antrieb ebenfalls benutzt.

Die Pumpe 3 ist auf ihre Antriebsseite 30 über eine Pumpenwelle 17 mit einem Antriebsradsatz 40 verbunden.

Dieser Antriebsradsatz 40 besteht aus einem Stirnradantrieb 4 sowie einem Abtriebselement 50.

Der Stirnradantrieb 4 besteht aus einem Ritzel 11, das kraftschlüssig, formschlüssig oder einteilig auf der Motorwelle 20 der elektrischen Maschine 2 angeordnet ist, sowie einem Hohlrad 15 mit einer Innenverzahnung 5. Das Ritzel 11 treibt das Hohlrad 15 entlang einer Achse A_{EM} an. Das Hohlrad 15 ist baulich mit einem Hohlradträger 14 in dem Abtriebselement 50 verbunden.

An der Außenseite des Abtriebselementes 50 ist ein Freilauf 7 mit Wälzlager angeordnet, über den ein Kettenrad 12 mit dem Abtriebselement 50 in Wirkverbindung gebracht wird. Dieses Kettenrad 12 steht über einen Kettentrieb 8 in Wirkverbindung mit dem Verbrennungsmotor und stellt somit den verbrennungsmotorischen Antrieb der Pumpe dar. In Figur 4 ist dargestellt wie eine Motorwelle 18 des Verbrennungsmotors, sei es eine Kurbelwelle oder eine Nockenwelle oder eine weitere Welle den Kettentrieb mit dem Kettenrad 12 verbindet.

An der Innenseite des Abtriebselementes 50 ist ein weiterer Freilauf 7 mit Wälzlager angeordnet, über den der Hohlradträger 14 in Wirkverbindung gebracht wird. Dieser Antriebsstrang stellt somit den elektrischen Antrieb der Pumpe 3 dar. Die antriebswirksame Verbindung zur Pumpe 3 stellt eine Antriebsnabe 13 her, die auf der Pumpenwelle 17 angebracht ist. Die Antriebsnabe 13 besteht aus einer im Schnitt u-förmigen Welle, deren erster Schenkel an der Pumpenwelle 17 anliegt und deren zweiter Schenkel zwischen den beiden Freiläufen 7 konzentrisch zur Achse Ap der Pumpe verläuft.

Das Hohlrad 15 wird in einer vorteilhaften Ausführungsform aus Kunststoff gespritzt und zusammen mit dem Hohlradträger 14 als ein Verbundbauteil hergestellt. Das Ritzel 11 kann als Stahl oder Kunststoffteil hergestellt werden, je nachdem was die kostengünstigste und lebensdaueroptimierte Alternative ist.

Durch die Verwendung eines Hohlrades 14 mit einem innenliegenden Ritzel 11 ergibt sich ein Achsversatz zwischen der Achse A_{EM} der elektrischen Maschine 2 und der Achse Ap der Pumpe 3. Dieser Achsversatz ist im Hinblick auf die zur Verfügung stehenden Bauraumverhältnisse günstig, da dann die elektrische Maschine 2 in Bezug auf den Pumpenantrieb freier positioniert werden kann und nicht zwangsweise eine koaxiale Anordnung braucht.

Als elektrischer Maschine 2 für den Pumpenantrieb wird ein bürstenloser Motor verwendet. Der Motor wird im nassen Innenraum des Getriebesystems 1 angeordnet. Das Gehäuse der elektrischen Maschine 2 ist nicht gedichtet. Der elektrische Motor 2 ist so ausgelegt, dass er in nasser Umgebung betrieben werden kann. Da die Temperatur im Getriebeinnenraum hoch sein kann, kann die elektrische Maschine aus Robustheitsgründen auch ohne Sensoren für die Kommutierung ausgeführt sein. Dies ist möglich, da die elektrische Maschine lediglich eine Pumpe antreiben muss und keine exakten Positionierungsaufgaben zu erfüllen hat.

Als alternative Lösung ist eine Anbindung der elektrischen Maschine über ein konventionelles zweistufiges Stirnradgetriebe denkbar. Allerdings steigen hier der Bauraumbedarf und die Anzahl der Bauteile.

Die Erfindung ermöglicht ein Getriebesystem, mit dem eine Hydraulikpumpe in einem Fahrzeuggetriebe von einer einzigen Anschlussseite wahlweise, aber nicht ausschließlich über einen Verbrennungsmotor oder eine elektrische Maschine angetrieben werden kann.

Die Verwendung von einem Freilauf 7 zwischen dem Kettenrad 12 und der Antriebsnabe 13 ermöglicht einen rein mechanischen Antrieb, wobei durch den zweiten Freilauf 7 zwischen Antriebsnabe und dem Hohlradträger die elektrische Maschine nicht mitdreht und entkoppelt ist.
Anderseits kann die elektrische Maschine antreiben, wobei der Freilauf 7 zwischen Kettenrad 12 und Antriebsnabe13 verhindert, dass der Kettentrieb 8 mitgeschleppt wird.

Eingesetzt werden kann dieses System in Verfahren, in denen bei Hybridgetrieben mit integrierter elektrischer Maschine die bestehenden Hydraulikmodule einschließlich der Hydraulikversorgung und somit auch der Pumpe vom Basisgetriebe ohne Änderung übernommen werden soll, mit dem Ziel auch bei elektrischem Fahren die Getriebefunktionen ohne laufenden Verbrennungsmotor aufrecht zu erhalten.

Weiterhin umfasst das Verfahren auch Funktionen, wenn das Basisgetriebe bezüglich Wirkungsgrad und Hilfsenergiebedarf weiter optimiert werden soll, indem das Hubvolumen der Hydraulikpumpe reduziert wird und bei niedrigen Verbrennungsmotordrehzahlen der Pumpenantrieb über die elektrische Maschine erfolgt, der mit höherer Drehzahl angetrieben wird.

Es ist auch der Betrieb von beiden Antriebssystemen parallel denkbar, wobei durch die Kombination von Freiläufen immer nur der schneller drehende Antrieb wirksam wird.

### Bezugszeichenliste

- 1: Getriebesystem
- 2: Elektrischer Maschine
- 3: Pumpe
- 4: Stirntrieb
- 5: Innenverzahnung
- 6: Lager
- 7: Freilauf
- 8: Kettentrieb
- 9: Kupplung
- 10: Stecker
- 11: Ritzel
- 12: Kettenrad
- 13: Antriebsnabe
- 14: Hohlradträger
- 15: Hohlrad
- 16: Lagersegment
- 17: Pumpenwelle
- 18: Antriebswelle Verbrennungsmotor
- 30: Antriebsseite Pumpe
- 40: Antriebsradsatz
- 50: Abtriebselement
- 20: Motorwelle

## Patentansprüche

1. Getriebesystem (1) in einem Fahrzeug mit einer Anbindung an einen Verbrennungsmotor sowie mindestens einer elektrischen Maschine (2) und einem hydraulischen Betätigungssystem mit mindestens einer Pumpe (3), wobei die Pumpe (3) mit der elektrischen Maschine (2) über einen elektrischen Antrieb und/oder einer Getriebekomponente über einen mechanischen Antrieb und über mindestens einen Freilaufmechanismus verbunden ist, **dadurch gekennzeichnet, dass** der elektrische Antrieb und der mechanische Antrieb der Pumpe (2) auf derselben Seite der Pumpe, der Antriebsseite (30) erfolgt.

2. Getriebesystem (1) nach Anspruch 1, **dadurch gekennzeichnet, dass** die Antriebsseite (30) der Pumpe (3) mit einem Antriebsradsatz (40) antriebswirksam verbunden ist.

3. Getriebesystem (1) nach Anspruch 1 oder 2, **dadurch gekennzeichnet, dass** der Antriebsradsatz (40) ein Abtriebselement (50) und einen Stirntrieb (4) umfasst.

4. Getriebesystem (1) nach einem der vorhergehenden Ansprüchen, **dadurch gekennzeichnet, dass** der Stirntrieb (4) an eine Motorwelle (20) der elektrischen Maschine (2) mit einem Ritzel (11) und einem Hohlrad (15) mit Innenverzahnung (5) ankoppelt.

5. Getriebesystem (1) nach einem der vorhergehenden Ansprüchen, **dadurch gekennzeichnet, dass** das Hohlrad (15) über einen Hohlradträger (14) im Abtriebselement (50) an einer Pumpenwelle (17) angreift.

6. Getriebesystem (1) nach einem der vorhergehenden Ansprüchen, **dadurch gekennzeichnet, dass** im Abtriebselement (50) zwischen Hohlradträger (14) und einer Antriebsnabe (13) ein Freilauf (7) angeordnet ist.

7. Getriebesystem (1) nach einem der vorhergehenden Ansprüchen, **dadurch gekennzeichnet, dass** im Abtriebselement (50) zwischen einem Kettenrad (12) und der Antriebsnabe (13) ein weiterer Freilauf (7) angeordnet ist.

8. Getriebesystem (1) nach einem der vorhergehenden Ansprüchen, **dadurch gekennzeichnet, dass** die Achse (A_{EM}) der elektrischen Maschinen (2) versetzt zu der Achse (Aₚ) der Pumpe angeordnet ist.

9. Verfahren zum Betrieb eines Getriebesystems (1) nach Anspruch 1 bis 8 **dadurch gekennzeichnet, dass** bei elektrischem Fahren die Getriebefunktionen ohne laufenden Verbrennungsmotor aufrecht gehalten werden.

10. Verfahren zum Betrieb eines Getriebesystems (1) nach Anspruch 1 bis 8 **dadurch gekennzeichnet, dass** das Hubvolumen der Pumpe reduziert wird und bei niedrigen Verbrennungsmotordrehzahlen der Antrieb über den elektrischen Motor erfolgt, der mit höherer Drehzahl angetrieben wird.

11. Verfahren zum Betrieb eines Getriebesystems (1) nach Anspruch 10, **dadurch gekennzeichnet, dass** beide Antriebe parallel betrieben werden wobei nur die höhere Drehzahl an einem der Antriebe die Pumpe (3) wirksam antreibt.
